# FASCICULE DE BREVET EUROPEEN

(11) **EP 2 139 726 B1**
(45) Date de publication et mention de la délivrance du brevet: **15.07.2015**
(21) Numéro de dépôt: 08805685.8
(22) Date de dépôt: 22.04.2008
(51) Int. Cl.: B60R 19/12, B60R 19/50, B60Q 1/04

(54) **MODULE D'ABSORPTION DE CHOCS POUR VEHICULE AUTOMOBILE**
STOSSDÄMPFUNGSSYSTEM FÜR EIN MOTORFAHRZEUG
IMPACT ABSORPTION MODULE FOR A MOTOR VEHICLE

(30) Priorité: 23.04.2007 FR 0754645
(43) Date de publication de la demande: 06.01.2010
(73) Titulaire: Compagnie Plastic Omnium, 69007 Lyon (FR)
(72) Inventeur: GINJA, Stéphane, F-01500 Amberieu en Bugey (FR)
(74) Mandataire: Thiollier, Clémence-Olivia Laure Marie
(86) Numéro de dépôt international: PCT/FR2008/050730
(87) Numéro de publication internationale: WO 2008/145923

(56) Documents cités:
- EP-A- 1 293 389
- EP-A- 1 772 352
- DE-A1-102004 024 987
- DE-A1-102004 038 893
- FR-A- 2 880 319
- FR-A1- 2 433 436
- FR-A1- 2 873 085
- US-A- 4 466 646
- US-A1- 2004 174 047

## Description

### Domaine technique.

La présente invention concerne le domaine des absorptions de chocs dans les véhicules automobiles, et en particulier de chocs avant de type chocs assurance.

### Etat de la technique.

En matière de chocs, les constructeurs automobiles s'imposent un cahier des charges qui envisage quatre principales catégories d'impacts, à savoir :
- Les chocs de type haute vitesse, qui correspondent à un impact frontal ou arrière du véhicule contre un obstacle rigide ou déformable. Pour un choc frontal, la vitesse du véhicule est d'au moins 56 km/h, avec un objectif de protection des occupants du véhicule.
- Les chocs de type assurance, à environ 15 km/h contre un mur fixe, tel que celui connu sous le nom de Danner ou encore AZT, ou à environ 8 km/h contre un angle de mur ou contre un poteau (chocs poteau, norme IIHS), traités avec un objectif de limitation des dégâts et coûts de réparation associés.
- Les petits chocs, ou chocs de type parking, à une vitesse inférieure à 8 km/h, traités avec un objectif de non détérioration extérieure de la peau de pare-chocs.
- Les chocs piéton réglementaires (jambe, fémur et tête).

Un système d'absorption de chocs décrit dans le document US 6 467 822 permet d'empêcher, lors d'un choc assurance, la déformation des longerons, afin notamment d'épargner le radiateur et les autres organes placés derrière lui. Ce système comprend und élément transversal supérieur, prenant appui sur une poutre de chocs, capable d'absorber de l'énergie par compression contre la poutre de chocs. Cette poutre de chocs prend elle-même appui sur deux longerons avant du véhicule. L'absorption d'énergie se fait par compression de l'élément transversal.

Le document FR2880319 décrit également un élèment transversal supérieur prenant appui contre une poutre de chocs. Il décrit en outre un élément transversal inférieur prenant appui contre une poutre piéton.

### Problème posé par l'état de la technique.

Afin d'absorber une énergie suffisante en cas de chocs assurance, il est nécessaire que l'élément transversal absorbe une majorité de l'énergie du choc, et donc que sa profondeur dans la direction longitudinale du véhicule soit supérieure à une valeur minimale, ce qui impose un certain porte-à-faux du véhicule dans la direction longitudinale, c'est-à-dire une certaine longueur de la partie avant du véhicule entre les longerons et la peau de pare-chocs.

Il en résulte que l'augmentation du porte-à-faux donne des contraintes à la géométrie extérieure du véhicule.

### Solution proposée.

L'invention vise à fournir un système d'absorption de chocs particulièrement performant, sans pour autant augmenter le porte-à-faux du véhicule dans la direction longitudinale.

A cet effet, l'invention a pour objet un module d'absorption de chocs pour véhicule automobile, selon la revendication 1.

### Avantages particuliers.

Grâce au cadre absorbeur formé par les éléments supérieur et inférieur et par les jambages, l'absorption d'énergie n'est pas assurée uniquement par l'élément transversal supérieur combiné à la poutre de chocs, lesquels sont agencés à hauteur des longerons du véhicule, mais également par des éléments agencés à une hauteur inférieure à celle des longerons, notamment grâce à la compression de l'élément transversal inférieur ou des jambages contre ladite pièce structurelle inférieure du véhicule. Il en ressort que l'absorption d'énergie par compression d'éléments absorbeurs est assurée sur plusieurs surfaces d'appui et que la surface totale de compression d'absorbeurs est plus grande que dans l'état de la technique. Les surfaces d'appui comprennent ainsi non seulement l'extrémité des longerons (telle qu'une platine de fixation de la poutre de chocs), mais également une surface d'appui offerte par la pièce structurelle inférieure. Comme la surface totale d'appui est plus élevée, l'épaisseur des éléments d'absorption dans la direction longitudinale peut être diminuée, tout en pouvant absorber une énergie suffisante en cas de chocs, notamment en cas de choc assurance.

On notera que la pièce structurelle inférieure est configurée pour ne pas se déformer de façon irréversible lors d'un choc de type assurance, c'est-à-dire qu'elle demeure intacte à l'issue d'un tel choc. Cette pièce se distingue donc d'une pièce d'appui qui serait destinée à résister uniquement à un choc piéton. Ainsi, la pièce structurelle inférieure reste intacte pour un effort pouvant aller jusqu'à 30 000 Newton.

En outre, grâce au cadre absorbeur, on améliore la compatibilité entre les véhicules en offrant une surface d'absorption plus importante qu'un système d'absorption classique. Les structures rigides des véhicules ne risquent ainsi pas de constituer des pièces intrusives particulièrement dangereuses et destructrices pour l'autre véhicule. Ainsi, le cadre absorbeur, du fait de son étendue dans la direction verticale, offre une surface de chocs plus grande à l'avant du véhicule, si bien qu'en cas de collision, la probabilité pour rencontrer le système d'absorption d'énergie de l'autre véhicule est particulièrement élevée.

Par ailleurs, le fait que le module d'absorption comporte des moyens de liaison avec au moins une partie d'un dispositif d'éclairage est particulièrement intéressant. En effet, les inventeurs à l'origine de la présente invention ont eu l'idée de réunir sur un seul module deux domaines techniques traditionnellement dissociés dans la construction automobile, à savoir le domaine de l'absorption d'énergie et celui de l'éclairage.

Ainsi, on dispose d'un module prêt à assembler comportant à la fois un cadre absorbeur et des moyens de liaison avec un dispositif d'éclairage, module que l'on peut rapporter pré-équipé sur le véhicule, limitant le nombre de pièces rapportées au cours du montage et libérant donc la chaîne principale de montage du véhicule.

Ce module peut ainsi intégrer une multiplicité de fonctions : la fonction de traitement de chocs, notamment les chocs piétons (via notamment les éléments transversaux inférieur, supérieur voire un élément transversal au-dessus de l'élément supérieur), les chocs de type parking et assurance, la fonction de liaison (notamment de positionnement, de support ou de fixation) avec un dispositif d'éclairage, la fonction de support et/ou de renforcement de pièces externes de carrosserie, ainsi que la fonction de support d'autres organes fonctionnels du véhicule, tels que des faisceaux, des capteurs, des fixations, un avertisseur sonore, etc.

On notera que les "moyens de liaison d'au moins une partie d'un dispositif d'éclairage" regroupent tout moyen participant à la liaison du dispositif d'éclairage avec le module d'absorption, ce qui peut comprendre des moyens de positionnement, des moyens de support, des moyens de fixation et/ou d'autres moyens de liaison.

### Modes de réalisation particuliers.

L'invention peut en outre comporter l'une ou plusieurs des caractéristiques suivantes.
- Les moyens de liaison comprennent des moyens de positionnement d'au moins une partie du dispositif d'éclairage, notamment des moyens de positionnement du vitrage du dispositif d'éclairage par rapport à une aile ou une peau de pare-chocs, afin de gérer les jeux et affleurements. Ainsi, le module d'absorption réunit les fonctions d'absorption d'énergie et de positionnement des dispositifs d'éclairage sur le véhicule, ces fonctions étant traditionnellement dissociées du fait que les éléments d'absorption ne nécessitent pas d'être positionnés de façon aussi rigoureuse que les dispositifs d'éclairage.
- Les moyens de positionnement comprennent un presseur, notamment destiné à recevoir le bord du vitrage du dispositif d'éclairage, d'une peau de pare-chocs, d'une aile.
- Les moyens de liaison comprennent des moyens de support d'au moins une partie du dispositif d'éclairage. Ainsi, pour un dispositif d'éclairage traditionnellement supporté en trois points sur le véhicule, les trois moyens de support étant portés, dans l'état de la technique, par des pièces de structure du véhicule, on peut prévoir sur le module d'absorption décrit ci-dessus l'un au moins des moyens de support du dispositif d'éclairage.
- Les moyens de liaison comprennent des moyens de support de tout le dispositif d'éclairage. Ainsi, on dispose d'un module permettant d'intégrer la totalité du dispositif d'éclairage, si bien que l'on peut tout d'abord monter le dispositif d'éclairage sur le module, puis l'ensemble du module avec le dispositif d'éclairage, sur le véhicule. Dans ce cas, les moyens de support sont de préférence également des moyens de positionnement du dispositif d'éclairage.
- Le module comprend des moyens de liaison avec au moins une partie d'un feu anti-brouillard.
- Le module comprend des moyens de liaison avec au moins une partie d'un bloc optique. On entend ici par bloc optique le dispositif d'éclairage principal du véhicule, que l'on désigne également phare ou projecteur.
- Les moyens de liaison sont fusibles, c'est-à-dire aptes à se rompre en cas d'un choc, de préférence en cas de choc piéton.
- Le module-comprend un renfort central apte à traiter le choc hanche ou choc fémur, ce renfort se prolongeant sur une traverse reprenant les efforts, notamment une traverse de face avant technique. De préférence, ce renfort comporte des moyens d'absorption d'énergie, pouvant être orientés sensiblement de haut en bas, venant prendre appui sur la traverse de reprise d'effort, de façon à accroître l'absorption d'énergie.
- Les éléments transversaux inférieur et supérieur, les jambages et les moyens de liaison sont en matière plastique, de préférence venus de moulage. On comprend que ce mode de réalisation est très avantageux du point de vue des coûts de fabrication, d'assemblage, pour traiter avec une seule pièce une majorité des cahiers des charges d'absorption d'énergie, notamment pour les chocs piéton et assurance, et également pour assurer la liaison avec le dispositif d'éclairage. Fabriquer une unique pièce pour assurer toutes ces fonctions présente en particulier l'avantage d'engendrer très peu de tolérances de fabrication.

Chaque jambage est destiné à prendre appui contre une pièce structurelle comprenant une portée d'appui, s'étendant vers le bas dans le prolongement de l'extrémité de chacun des longerons. Ainsi, les jambages participent à l'absorption par compression contre cette portée d'appui. De préférence, la pièce structurelle comporte un haubanage, par exemple sous forme d'équerre, qui reporte sur une face inférieure ou latérale du longeron, ou bien sur une pièce supplémentaire liée aux longerons, les efforts subis lors de la compression de l'un des jambages. Ce haubanage assure un renfort de la pièce d'appui, permettant de mieux résister au pliage ou à une autre déformation en cas de chocs de type assurance.
- La pièce structurelle comprend des longerons inférieurs, également appelés longeronnets ou prolonges de berceau de véhicule automobile, servant d'appui pour la compression de l'élément transversal inférieur au droit des longerons inférieurs, ou encore pour la compression de la partie inférieure des jambages. Ainsi, le cadre absorbeur prend appui non seulement sur une voie haute du véhicule, composée notamment des longerons principaux, mais également sur une voie basse du véhicule.

Chacun des éléments transversaux supérieur et inférieur et chaque jambage comprend des moyens d'absorption de chocs de type assurance. Ainsi, chacun de ces moyens est capable de se déformer à la suite d'un tel choc, afin d'empêcher la déformation plastique du châssis du véhicule (comprenant notamment les longerons supérieurs et éventuellement les longerons inférieurs, etc.), ou encore la déformation plastique du radiateur et d'autres éléments rapportés autour de ce radiateur. On entend par déformation plastique, une déformation irréversible à la suite du choc. On notera que des moyens d'absorption de chocs de type assurance se distinguent de moyens d'absorption de chocs de type parking, lesquels sont capables d'absorber une énergie relativement faible en se déformant, ou encore de moyens de protection du piéton, destinés à traiter des chocs de type "choc jambe" ou "choc hanche", ou encore "choc tête". L'homme du métier sait distinguer de tels moyens d'absorption de chocs de type assurance. De préférence, le module est capable d'assurer, en se déformant, au moins 30% de l'absorption d'énergie en cas de chocs de type assurance.
- Le module comprend le dispositif d'éclairage. On peut ainsi rapporter le module, déjà équipé du dispositif d'éclairage, accompagné éventuellement de la peau de pare-chocs, sur le véhicule, ce qui libère la chaîne principale de montage du véhicule.

L'invention a également pour objet un ensemble d'une poutre de chocs, d'une pièce structurelle inférieure et d'un module tel que défini ci-dessus.

### Description des figures.

L'invention sera mieux comprise à la lecture de la description qui va suivre, donnée uniquement à titre d'exemple et faite en se référant aux dessins dans lesquels :
- La figure 1 est un schéma en perspective de parties avant d'un véhicule comportant un module selon un premier mode réalisation de l'invention ;
- La figure 2 est un schéma en perspective de parties avant d'un véhicule comportant un module selon un deuxième mode de réalisation de l'invention ;
- La figure 3 est un schéma en perspective de parties avant d'un véhicule comportant un module selon un troisième mode de réalisation de l'invention.

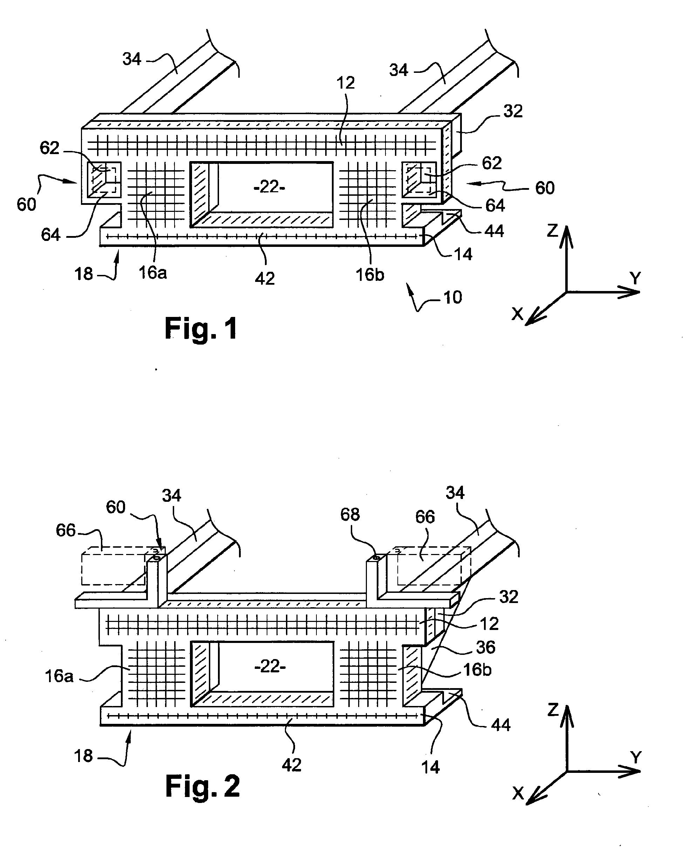

Comme on peut le voir les figures 1 à 3, un module 10 d'absorption de chocs comporte un élément transversal supérieur 12, un élément transversal inférieur 14, et deux jambages 16a, 16b reliant les deux éléments transversaux supérieur 12 et inférieur 14, de façon à former un cadre absorbeur 18. Le module 10 est réalisé en matière plastique, de préférence en polypropylène. Chacun des éléments 12, 14, 16a et 16b du cadre absorbeur 18 comporte des moyens d'absorption de chocs de type assurance. De façon à optimiser l'absorption, ces moyens comprennent des nervures disposées en nid d'abeille. Le module 10 définit un caisson 22 de guidage de l'air vers le radiateur du véhicule.

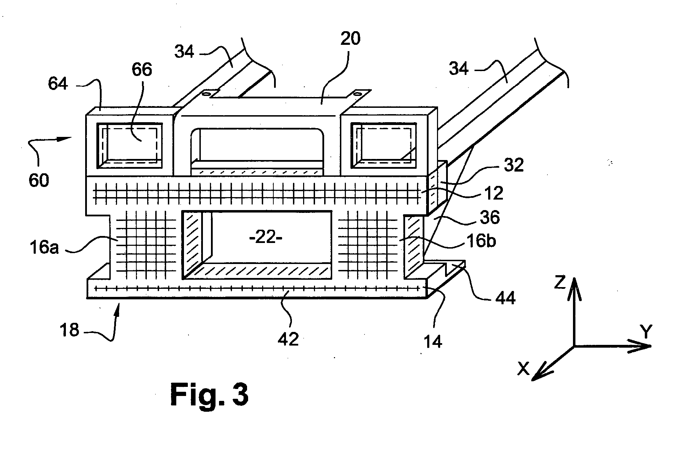

Par ailleurs, le module 10 comprend des moyens 60 de liaison d'au moins une partie d'un dispositif d'éclairage 62 sur la figure 1 et 66 sur les figures 2 et 3, représentés schématiquement en pointillés. Sur la figure 1, le dispositif d'éclairage 62 est un feu anti-brouillard, alors que sur les figures 2 et 3, le dispositif 66 est un bloc optique, dispositif principal supérieur appelé aussi phare ou projecteur.

Les moyens 60 de la figure 1 comprennent à la fois des moyens de positionnement, des moyens de support et des moyens de fixation de l'anti-brouillard 62. En effet, les moyens 60 comprennent un logement 64 dont le contour est fermé, destiné à recevoir l'anti-brouillard 62, ce logement permettant de positionner l'anti-brouillard dans les directions Y et Z. Eventuellement, on ménages autour du logement 64 des presseurs dans lesquels un bord d'une peau de pare-chocs est inséré afin de positionner convenablement le feu 62 par rapport à la peau. En outre, le logement 64 permet de recevoir l'intégralité de l'anti-brouillard 62, si bien que les moyens 60 sont capables de supporter la totalité du poids de l'anti-brouillard. Enfin, le logement 64 comprend par exemple des orifices de fixation (non représentés) permettant de fixer définitivement l'anti-brouillard une fois positionné dans le logement.

Les moyens 60 de la figure 3 permettent également de positionner et supporter l'intégralité du bloc optique 66, de façon similaire aux moyens de la figure 1, les éventuels presseurs pouvant également positionner le vitrage du bloc optique 66 avec une aile. De façon alternative, les moyens 60 ne supportent pas tout le bloc optique 66 mais une partie seulement, et sont capables de porter plus de 1/3 du poids du bloc 66. De façon alternative encore, les moyens 60 représentés sur la figure 3 permettent principalement de positionner le bloc 66, au moyen du logement 64 et de presseurs, et ne supportent qu'une très faible partie du bloc 66.

Les moyens 60 de la figure 2, permettent de positionner, et éventuellement de supporter, une partie seulement du dispositif d'éclairage. Ces moyens comprennent deux montants délimitant en partie un logement pour recevoir une partie du bloc optique 66. Ces moyens comprennent, au voisinage du vitrage du bloc 66, des presseurs pour positionner le vitrage par rapport à la peau de pare-chocs. Les moyens permettent également de fixer une partie du bloc 66, grâce aux orifices 68.

On notera que les moyens de positionnement peuvent prendre diverses formes, et consistent le plus souvent à prévoir des butées pour immobiliser le vitrage du dispositif d'éclairage dans une ou plusieurs directions.

De préférence, les moyens 60 sont venus de moulage avec le cadre absorbeur 18.

Une poutre de chocs 32 est rapportée sur le module 10, de façon à servir d'appui pour la compression de l'élément transversal supérieur 12. Cette poutre de chocs 32 comporte éventuellement, sur sa face arrière, deux absorbeurs ou crash box, rapportés ou d'un seul tenant, disposés au droit des longerons 34 du véhicule.

Le module 10 et la poutre de chocs 32 sont rapportés sur le châssis avant du véhicule. Ce châssis comporte, en plus des deux longerons supérieurs 34, deux pièces structurelles inférieures 36 (visibles sur les figures 2 et 3), s'étendant chacune vers le bas dans le prolongement de l'extrémité de chacun des longerons 34, présentant une portée d'appui, de façon à servir de surface d'appui aux jambages 16a et 16b, et éventuellement aux parties de l'élément transversal inférieur 14 situées en dessous des longerons. Les pièces structurelles inférieures 36 comportent chacune un haubanage en forme d'équerre, capables de reporter sur la face inférieure des longerons 34 les efforts subis brs de la compression des jambages 16a, 16b, ou lors de la compression de l'élément inférieur 14 contre la portée d'appui de chaque pièce 36. Ces pièces structurelles 36 sont suffisamment résistantes pour demeurer intactes sur le véhicule en cas de choc de type assurance, c'est-à-dire qu'elles ne se déforment pas de façon irréversible.

Ainsi, en cas de choc assurance, les éléments 12, 14, 16a et 16b du module 10 sont capables de se déformer, par compression contre les longerons 34 et la portée d'appui des pièces structurelles 36, de façon à absorber l'énergie du choc. Cette énergie peut par ailleurs être absorbée par la compression des crash box agencés sur la poutre de chocs 32. Grâce à cette absorption de chocs, le châssis du véhicule n'est pas déformé par un choc de type assurance et, en conséquence, le radiateur agencé derrière le module, entre les deux longerons 34, n'est pas endommagé par le choc.

On notera que le module 10, associé à l'un des dispositifs d'éclairage 62, 66, peut être assemblé en dehors de la chaîne de montage du véhicule, de façon à être rapporté en un seul bloc sur le châssis. Le dispositif d'éclairage peut être positionné définitivement en dehors de la chaîne de montage, ou bien une fois que le module est rapporté sur le véhicule. Le module 10 peut être fixé sur le véhicule en divers points prévus notamment sur les éléments 12, 14, 16a et 16b.

On notera en outre que le module 10 peut également intégrer une multiplicité de fonctions supplémentaires, telles que la fonction de support de fixations, de faisceaux, de capteurs, de klaxon, de guidage d'air vers un autre élément que le radiateur, par exemple un radiateur d'air de suralimentation, lequel pourrait être prévu au-dessus du radiateur principal, ou encore sur les côtés, à l'extrémité extérieure de l'un des jambages 16a, 16b.

Le module 10 pourrait également intégrer la fonction de support ou de renfort d'une pièce de carrosserie, comme on peut le voir sur la figure 3. En effet, le module 10 de cette figure comporte un renfort central 20, s'étendant au-dessus de l'élément transversal supérieur 12, permettant de soutenir la partie supérieure de la peau de pare-chocs du véhicule, tout en assurant une fonction de renforcement de la peau et de gestion des jeux et affleurements. Ce renfort 20 peut également assurer une fonction de traitement de choc piéton, tel que le choc appelé "choc hanche" ou "choc fémur". Dans un mode de réalisation avantageux, la partie du renfort 20 située à hauteur d'une hanche de piéton comporte des moyens d'absorption, et/ou le renfort se prolonge sur une traverse reprenant les efforts, notamment une traverse de face avant technique. De préférence, le renfort est prolongé par un absorbeur, sensiblement orienté de haut en bas, venant prendre appui sur la traverse de face avant technique, de façon à accroître l'absorption d'énergie.

Le module 10 peut également comporter une paroi formant guide d'air s'étendant depuis l'élément transversal supérieur 12 vers le radiateur, de façon à pouvoir, avec le reste du module 10, guider l'air entrant par des ouvertures ménagées dans la peau de pare-chocs vers le radiateur du véhicule, et ainsi former un compartiment de guidage le plus efficace possible, voire étanche.

En outre, l'élément transversal inférieur 14 peut comprendre, sur sa face tournée vers la peau de pare-chocs, un appui bas 42 destiné à traiter un choc piéton, ainsi qu'un convergent inférieur 44 destiné à guider l'air vers le radiateur.

Par ailleurs, le châssis arrière du véhicule peut ne pas comporter les pièces structurelles 36, mais des longerons inférieurs, ou encore à la fois des pièces telles que les pendards 36 et des longerons inférieurs permettant de reprendre l'effort reçu par l'extrémité inférieure des pendards 36.

L'homme du métier comprendra que l'ensemble de ces fonctionnalités peuvent être combinées sur l'un ou l'autre des modules des figures 1 à 3, et que les différents moyens de positionnement, de support et de fixation faisant partie des moyens de liaison peuvent également être combinés entre eux de diverses façons.

## Revendications

1. Module (10) d'absorption de chocs pour véhicule automobile, comportant :
- un élément transversal supérieur (12), destiné à être en appui contre une poutre de chocs (32) du véhicule,
- un élément transversal inférieur (14), **caractérisé en ce qu'**il comprend deux jambages (16a, 16b) reliant les éléments transversaux supérieur (12) et inférieur (14) de façon à former sensiblement un cadre (18), appelé cadre absorbeur, chaque jambage (16a, 16b) étant configuré pour prendre appui contre une pièce structurelle (36) inférieure du véhicule comprenant une portée d'appui, s'étendant vers le bas dans le prolongement de l'extrémité de chacun des longerons (34), chacun des éléments transversaux supérieur (12) et inférieur (14) et chaque jambage (16a, 16b) comprend des moyens d'absorption de chocs de type assurance.
- des moyens (60) de liaison d'au moins une partie d'un dispositif d'éclairage (62, 66).

2. Module selon la revendication 1, dans lequel les moyens de liaison comprennent des moyens de positionnement d'au moins une partie du dispositif d'éclairage.

3. Module selon la revendication 2, dans lequel les moyens de positionnement comprennent un presseur.

4. Module selon l'une quelconque des revendications 1 à 3, dans lequel les moyens de liaison comprennent des moyens de support d'au moins une partie du dispositif d'éclairage.

5. Module selon la revendication 4, dans lequel les moyens de liaison comprennent des moyens de support de tout le dispositif d'éclairage.

6. Module selon l'une quelconque des revendications précédentes, comprenant des moyens de liaison avec au moins une partie d'un feu anti-brouillard (62).

7. Module selon l'une quelconque des revendications précédentes, comprenant des moyens de liaison avec au moins une partie d'un bloc optique (66).

8. Module selon l'une quelconque des revendications précédentes, dans lequel les moyens de liaison sont fusibles.

9. Module selon l'une quelconque des revendications précédentes, dans lequel les éléments transversaux inférieur (14) et supérieur (12), les jambages (16a et 16b) et les moyens de liaison (60) sont en matière plastique, de préférence venus de moulage.

10. Module selon l'une quelconque des revendications précédentes, dans lequel la pièce structurelle comprend des longerons inférieurs.

11. Module selon l'une quelconque des revendications précédentes, comprenant un renfort central (20) traitant le choc hanche ou choc fémur, comportant des moyens d'absorption d'énergie.

12. Module selon l'une quelconque des revendications précédentes, comprenant le dispositif d'éclairage (62, 66).

13. Ensemble d'une poutre de chocs (32), d'une pièce structurelle inférieure (36) et d'un module selon l'une quelconque des revendications précédentes.

## Patentansprüche

1. Stoßdämpfungssystem (10) für ein Motorfahrzeug, das Folgendes aufweist:
- ein oberes Querelement (12), das zur Abstützung gegen einen Aufprallträger (32) des Fahrzeugs bestimmt ist,
- ein unteres Querelement (14), **dadurch gekennzeichnet, dass** es zwei Pfosten (16a, 16b) umfasst, die das obere (12) und untere (14) Querelement so verbinden, dass sie im Wesentlichen einen Rahmen (18), als Dämpfungsrahmen bezeichnet, bilden, wobei jeder Pfosten (16a, 16b) dafür ausgebildet ist, gegen ein unteres Konstruktionsteil (36) des Fahrzeugs zur Abstützung zu kommen, das eine Abstützfläche umfasst, die sich nach unten in der Verlängerung des Endes jedes der Längsträger (34) erstreckt, wobei jedes des oberen (12) und unteren (14) Querelements und jeder Pfosten (16a, 16b) Stoßdämpfungsmittel des Absicherungstyps umfasst,
- Mittel (60) zum Verbinden wenigstens eines Teils einer Beleuchtungsvorrichtung (62, 66).

2. System nach Anspruch 1, wobei die Verbindungsmittel Mittel zum Positionieren wenigstens eines Teils einer Beleuchtungsvorrichtung umfassen.

3. System nach Anspruch 2, wobei die Mittel zum Positionieren ein Andrückelement umfassen.

4. System nach einem der Ansprüche 1 bis 3, wobei die Verbindungsmittel Mittel zum Halten wenigstens eines Teils der Beleuchtungsvorrichtung umfassen.

5. System nach Anspruch 4, wobei die Verbindungsmittel Mittel zum Halten der gesamten Beleuchtungsvorrichtung umfassen.

6. System nach einem der vorhergehenden Ansprüche, umfassend Mittel zum Verbinden mit wenigstens einem Teil einer Nebelleuchte (62).

7. System nach einem der vorhergehenden Ansprüche, umfassend Mittel zum Verbinden mit wenigstens einem Teil eines Scheinwerfereinsatzes (66).

8. System nach einem der vorhergehenden Ansprüche, bei dem die Verbindungsmittel zerbrechlich sind.

9. System nach einem der vorhergehenden Ansprüche, bei dem das untere (14) und das obere (12) Querelement, die Pfosten (16a und 16b) und die Verbindungsmittel (60) aus Kunststoff sind, vorzugsweise angeformt sind.

10. System nach einem der vorhergehenden Ansprüche, bei dem das Konstruktionsteil untere Längsträger umfasst.

11. System nach einem der vorhergehenden Ansprüche, umfassend eine mittige Verstärkung (20), die den Aufprall gegen die Hüfte oder den Aufprall gegen den Oberschenkelknochen aufnimmt und Energieabsorptionsmittel aufweist.

12. System nach einem der vorhergehenden Ansprüche, umfassend die Beleuchtungsvorrichtung (62, 66).

13. Baugruppe aus einem Aufprallträger (32), einem unteren Konstruktionsteil (36) und einem System nach einem der vorhergehenden Ansprüche.

## Claims

1. Shock absorption module (10) for motor vehicle, comprising:
- an upper transverse member (12) intended to rest against a bumper (32) of the vehicle,
- a lower transverse member (14), **characterised in that** it comprises two legs (16a, 16b) connecting the upper transverse member (12) and lower transverse member (14) so as to substantially form a frame (18), called absorber frame, each leg (16a, 16b) being configured to rest against a lower structural part (36) of the vehicle comprising a bearing surface, extending downwards in the extension of the end of each side beam (34), each of the upper transverse member (12) and lower transverse member (14) and each leg (16a, 16b) comprising insurance type shock absorption means.
- means (60) for connecting at least a portion of a lighting device (62, 66).

2. Module according to claim 1, wherein the connecting means include means for positioning at least a portion of the lighting device.

3. Module according to claim 2, wherein the positioning means comprise a presser.

4. Module according to any one of claims 1 to 3, wherein the connecting means comprise means for supporting at least a portion of the lighting device.

5. Module according to claim 4, wherein the connection means comprise means for supporting the entire lighting device.

6. Module according to any one of the preceding claims, comprising means for connecting with at least a portion of a fog light (62).

7. Module according to any one of the preceding claims, comprising means for connecting with at least a portion of a headlight unit (66).

8. Module according to any one of the preceding claims, wherein the connecting means are breakable.

9. Module according to any one of the preceding claims, wherein the upper transverse member (12) and lower transverse member (14), the legs (16a and 16b) and the connecting means (60) are made of plastic, preferably integrally moulded.

10. Module according to any one of the preceding claims, wherein the structural part comprises lower side beams.

11. Module according to any one of the preceding claims, comprising a central reinforcement (20) to deal with hip impact or femur impact, comprising energy absorbing means.

12. Module according to any one of the preceding claims, comprising the lighting device (62, 66).

13. Assembly of a bumper (32), a lower structural part (36) and a module according to any one of the preceding claims.
